# EUROPEAN PATENT APPLICATION

(11) **EP 3 239 909 A1**
(43) Date of publication of application: **01.11.2017**
(21) Application number: 17167830.3
(22) Date of filing: 24.04.2017
(51) Int. Cl.: G06Q 10/08

(54) **SYSTEMS AND METHODS FOR MONITORING COMMERCIAL GAS CYLINDER STORAGE FACILITIES**

(30) Priority: 25.04.2016 US 201662327288 P
(71) Applicant: Southern California Sensor Company, Carlsbad, CA 92008 (US)
(72) Inventor: ESSEY, Edward Albert, Carlsbad, CA California 92008 (US)
(74) Representative: Beck Greener

(57) **Abstract**

The present disclosure relates to a system for facilitating remote monitoring of gas cylinder exchange inventories. The remote inventory monitoring system comprising one or more weight-based sensors configured to be disposed at corresponding cylinder positions including a first cylinder position within a cylinder storage apparatus. The one or more weight-based sensors may include a first weight-based sensor configured to provide an output signal that conveys information related to whether a cylinder located at the first cylinder position is full or empty. One or more hardware processors may be configured by machine-readable instructions to receive the output signal from a communications device communicatively coupled with the one or more weight-based sensors and effectuate transmission of the information to one or more servers configured to store the information in an inventory database and facilitate display of a user interface that conveys replenishment status of a plurality of cylinder storage apparatuses.

## Description

### CROSS-REFERENCE TO RELATED APPLICATIONS

This application claims priority and benefit to U.S. Provisional Application No. 62/327,288, filed on April 25, 2016 and entitled "SYSTEMS AND METHODS FOR MONITORING COMMERCIAL GAS CYLINDER STORAGE FACILITIES", the contents of which is incorporated herein by reference in its entirety.

### FIELD OF THE DISCLOSURE

This disclosure relates to systems and methods for facilitating remote monitoring of compressed and liquefied gas cylinder exchange inventories.

### BACKGROUND

Suppliers of compressed and liquefied gases are often left guessing exactly when a customer may need to have their supply replenished. This uncertainty may result in either unnecessary deliveries or customers running completely out of product.

### SUMMARY

Exemplary implementations address problems that specifically arise out of remote monitoring of cylinders of compressed and liquefied gases in applications including restaurant patios, workshops, hospitals, and/or other applications. Suppliers of portable gas cylinders usually stock distributors' inventories with enough spare cylinders to go weeks or even months between deliveries. Given that these cylinders are portable and standardized, customers may exchange their empty cylinders for full cylinders at various designated locations, often at a distributors' standardized storage cage configured to store such cylinders. Exemplary implementations may alleviate problems in situations where suppliers of these portable gas cylinder storage cages are left guessing exactly when to re-stock the distributors' storage cage. Conventionally, this uncertainty may result in the inefficiency of either unnecessary deliveries or distributors' running completely out of full cylinders, disrupting their business while waiting for delivery. Either way, labor is wasted and costs may rise. In addition, installing monitors on every cylinder may be impractical for a number of reasons such as raw costs and likelihood of loss due to the fact that these cylinders may be swapped by customers between different vendors.

Therefore, one aspect of the present disclosure relates to a practical and efficient way to affordably monitor portable compressed and liquefied gas cylinders, by monitoring the stationary storage cages where cylinders spend most of their time. By determining if cylinders in a storage cage are full or empty, suppliers could more accurately forecast when and where deliveries need to be made. This will save time, labor, miles driven, and prevent customers from ever having an "out of gas" disruption. By way of non-limiting example, suppliers may be offered one or more components of the present disclosure as a HaaS or "Hardware as a Service," based on monthly billing. One or more components of the present disclosure (e.g., sensors, communication devices, and/or other components) may be sent to the suppliers, to be installed on-site in their customers' cages, in accordance with one or more implementations.

Another aspect of the present disclosure relates to a system configured for facilitating remote monitoring of gas cylinder exchange inventories. The system may comprise one or more weight-based sensors configured to be disposed at corresponding cylinder positions including a first cylinder position within a cylinder storage apparatus. The one or more weight-based sensors may include a first weight-based sensor. The first weight-based sensor may be configured to provide an output signal that conveys information related to whether a cylinder located at the first cylinder position is full or empty. The system may comprise one or more hardware processors communicatively coupled with the one or more weight-based sensors. The one or more hardware processors may be configured by machine-readable instructions to receive the output signal from the one or more weight-based sensors. The one or more hardware processors may be configured by machine-readable instructions to effectuate transmission of the information conveyed by the output signal to one or more servers. The one or more servers may be configured to store the information conveyed by the output signal in an inventory database. The one or more servers may be configured to facilitate display of a user interface that conveys replenishment status of a plurality of cylinder storage apparatuses. A cylinder storage apparatus communications device may be configured to transmit the output signal.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRAWINGS

FIG. 1 illustrates a system configured for facilitating remote monitoring of gas cylinder exchange inventories, in accordance with one or more implementations.
FIGS. 2A, 2B, and 2C, illustrate an exemplary system configured for facilitating remote monitoring of gas cylinder exchange inventories, in accordance with one or more implementations.
FIG. 3 illustrates a method for facilitating remote monitoring of gas cylinder exchange inventories, in accordance with one or more implementations.

### DETAILED DESCRIPTION

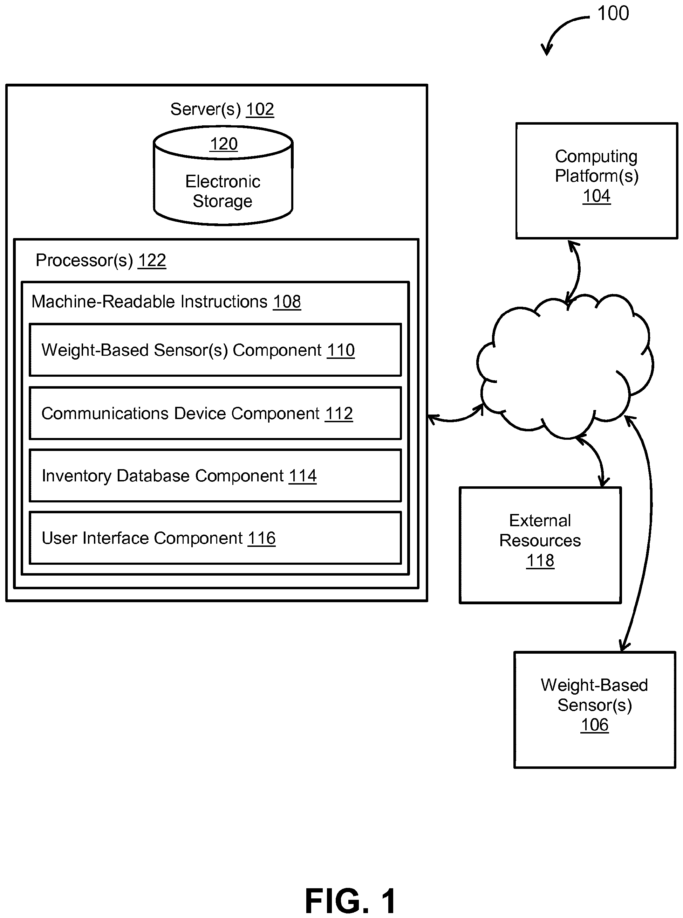

FIG. 1 illustrates a system 100 configured for facilitating remote monitoring of gas cylinder exchange inventories, in accordance with one or more implementations. In some implementations, system 100 may include one or more servers 102. The server(s) 102 may be configured to communicate with one or more computing platforms 104 according to a client/server architecture. Users may access system 100 via computing platform(s) 104. The server(s) 102 may be configured to execute machine-readable instructions 108. The machine-readable instructions 108 may include one or more of weight-based sensor(s) component 110, communications device component 112, inventory database component 114, a user interface component 116, and/or other components.

The weight-based sensor(s) component may include one or more weight-based sensors configured to be disposed at corresponding cylinder positions including a first cylinder position within a cylinder storage apparatus. The one or more weight-based sensors may include a spring scale, a spring balance, a digital scale, strain gauge, load sensor, transducer, pressure sensor, and/or other weight-based sensor. The one or more weight-based sensors may include a first weight-based sensor. The first weight-based sensor may be configured to provide an output signal that conveys information related to whether a cylinder located at the first cylinder position is full or empty. In some implementations, the output signal conveyed by the one or more weight-based sensors may include a binary signal conveying information related to whether an individual cylinder is either (1) full or (2) not full based on whether a weight threshold is breached. The first weight-based sensor may include a power source. The power source may include one or more of a battery, a solar cell, an electrical inlet configured to receive electricity from an external source, and/or other power supplies. The first weight-based sensor may be configured to power on responsive to engagement by the cylinder being received at the first cylinder position. In some implementations, one or more weight-based sensors may be configured to share a common power source.

The cylinder may be a standardized cylinder, tank, bottle, keg, can, Dewar flask, and/or other container. The cylinder may hold contents including compressed and liquefied gas, water, beer, paint, powder, shot, and/or other liquids, solids, and/or gasses. The compressed and liquefied gas may be one or more of Hydrogen, Helium, Nitrogen, Carbon Dioxide, Propane, welding gas, Argon, Nitrous Oxide, and/or other gasses. By way of non-limiting example, the cylinder may have a volumetric capacity in a range between about five gallons and about twenty-five gallons, inclusive (e.g., ten gallons, fifteen gallons, twenty gallons, and/or other volumes). As another non-limiting example, the cylinder may have a weight capacity in a range between about twenty pounds and about one hundred sixty pounds, inclusive (e.g., forty pounds, sixty pounds, eighty pounds, one hundred pounds, one hounded twenty pounds, one hundred forty pounds, and/or other volumes).

The weight-based sensors may be configured to be disposed within the cylinder storage apparatus in a configuration corresponding to a layout of one or more cylinders disposed within the cylinder storage apparatus. The cylinder storage apparatus may include one or more of a standardized storage cage, storage cabinet, safety locker, storage rack, delivery rack, and/or other enclosed or open storage area. The one or more weight-based sensors may be configured to be disposed between the cylinder and a resting surface of the cylinder storage apparatus. The resting surface of the cylinder storage apparatus may include one or more of a shelf, a slot, a ledge, a sill, a rack, a floor, and/or other surface.

The one or more weight-based sensors may be configured to be removably coupled with the cylinder storage apparatus. The first weight-based sensor may be configured to remain at the first cylinder position as cylinders are removed or replaced. The first weight-based sensor is configured to be engaged by a given cylinder resting on the first weight-based sensor with the given cylinder being in a horizontal position, a vertical position, an upright position, positioned on a first side at the first cylinder position, and/or other positions.

The first weight-based sensor may be configured to communicatively couple with one or more of a second weight-based sensor, a third weight-based sensor, a fourth weight-based sensor, a fifth weight-based sensor, a sixth weight-based sensor, a seventh weight-based sensor, an eighth weight-based sensor, a ninth weight-based sensor, and/or other weight-based sensors. One or more of the second weight-based sensor, the third weight-based sensor, the fourth weight-based sensor, the fifth weight-based sensor, the sixth weight-based sensor, the seventh weight-based sensor, the eighth weight-based sensor, the ninth weight-based sensor, and/or other weight-based sensors may be configured to communicatively couple with one or both of the cylinder storage apparatus communications device or the server(s). By way of non-limiting example, a cylinder storage apparatus may be configured to accommodate cylinders with corresponding weight-based sensors in a range between about three cylinders with three corresponding weight-based sensors and about twenty-four cylinders with twenty-four corresponding weight-based sensors, inclusive (e.g., six weight-based sensors, nine weight-based sensors, twelve weight-based sensors, fifteen weight-based sensors, eighteen weight-based sensors, twenty-one weight-based sensors, and/or other configurations of weight-based sensors).

The communications device component 112 may include one or more of a communications device. The communications device may be communicatively coupled with one or more weight-based sensors. The communications device may be configured to transmit the output signal conveying information related to whether a cylinder located at the first cylinder position is full or empty. The communications device may be configured to effectuate transmission of the information conveyed by the output signal to one or more servers. The one or more servers may be configured to store the information conveyed by the output signal in an inventory database. The output signal conveyed by the communications device may include a binary signal conveying information related to whether an individual cylinder is either (1) full or (2) not full based on whether a weight threshold is breached. The first weight-based sensor may include a first communications device configured to provide an output signal to one or both of the cylinder storage apparatus communications device or the one or more servers. The first communications device may be configured to facilitate wireless communication of the output signal. The communication device may be configured to transmit the output signal to the inventory database via one or more of second, third, fourth, and/or greater generation wireless telephone technology (e.g., 2G, 3G, 4G, EDGE, Global System for Mobile Communications (GSM), and/or other wireless technologies), Wi-Fi, Ethernet, phone, satellite, and/or other telecommunications methods.

In some implementations, the communications device may be configured to transmit the output signal continuously, periodically, and/or responsive to a user inquiry. The communications device may be configured to transmit information relating to one or more of location of the communications device, location of a corresponding cylinder storage apparatus, type of cylinders being monitored, status of the cylinders, battery life, and/or other data. By way of non-limiting example, a supplier may automatically receive an inventory status notification once per day.

In some implementations, the communications device may be disposed at the one or more weight-based sensors. The communications device may be a built-in feature of the one or more weight based sensors. One or more of the weight based sensors may be configured to transmit the output signal conveying information related to whether one or more cylinders disposed at the cylinder storage apparatus are full or empty. One or more of the weight based sensors may be configured to effectuate transmission of the information conveyed by the output signal to the one or more servers, in accordance with one or more implementations.

The inventory database component 114 may include one or more of an inventory database. The inventory database may be configured to store information related to whether an individual cylinder is either (1) full or (2) not full based on whether a weight threshold is breached. The inventory database may be accessed by suppliers and other users via one or more of the internet, an application, a web-based application, a mobile application, a communications network, a website, an interactive database, a map, an interactive map, and/or other resources. The inventory database may be configured to monitor one or more cylinders at one or more cylinder storage apparatus locations.

The user interface component 116 may be configured to present a user interface via a hardware display of a given computing platform 104. The user interface may be configured to receive information from a user and/or provide information to the user. The user interface may include a graphical user interface. The one or more servers may be configured to facilitate display of the user interface that conveys replenishment status of a plurality of cylinder storage apparatuses. The user interface may be configured to receive user information. The user interface may be configured to transmit a notification of replenishment status via one or more of the internet, an application, a web-based application, a mobile application, a communications network, a website, email, an interactive database, a map, an interactive map, and/or other resources.

In some implementations, server(s) 102, computing platform(s) 104, and/or external resources 118 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which server(s) 102, computing platform(s) 104, weight-based sensor(s) 106, and/or external resources 118 may be operatively linked via some other communication media.

A given computing platform 104 may include one or more processors configured to execute machine-readable instructions. The machine-readable instructions may be configured to enable an expert or user associated with the given computing platform 104 to interface with system 100 and/or external resources 118, and/or provide other functionality attributed herein to computing platforms 104. By way of non-limiting example, the given computing platform 104 may include one or more of a desktop computer, a laptop computer, a handheld computer, a tablet computing platform, a NetBook, a Smartphone, a gaming console, and/or other computing platforms.

External resources 118 may include sources of information, hosts and/or providers of media items outside of system 100, external entities participating with system 100, and/or other resources. In some implementations, some or all of the functionality attributed herein to external resources 118 may be provided by resources included in system 110.

Server(s) 102 may include electronic storage 120, one or more processors 122, and/or other components. Server(s) 102 may include communication lines, or ports to enable the exchange of information with a network and/or other computing platforms. Illustration of server(s) 102 in FIG. 1 is not intended to be limiting. Server(s) 102 may include a plurality of hardware, software, and/or firmware components operating together to provide the functionality attributed herein to server(s) 102. For example, server(s) 102 may be implemented by a cloud of computing platforms operating together as server(s) 102.

In some implementations, a given computing platform 104 may include electronic storage that is the same as or similar to electronic storage 120. A given computing platform 104 may include one or more processors that are the same as or similar to processor(s) 122.

Electronic storage 120 may comprise non-transitory storage media that electronically stores information. The electronic storage media of electronic storage 120 may include one or both of system storage that is provided integrally (i.e., substantially non-removable) with server(s) 102 and/or removable storage that is removably connectable to server(s) 102 via, for example, a port (e.g., a USB port, a firewire port, etc.) or a drive (e.g., a disk drive, etc.). Electronic storage 120 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 120 may include one or more virtual storage resources (e.g., cloud storage, a virtual private network, and/or other virtual storage resources). Electronic storage 120 may store software algorithms, information determined by processor(s) 122, information received from server(s) 102, information received from computing platform(s) 104, and/or other information that enables server(s) 102 to function as described herein.

Processor(s) 122 is configured to provide information processing capabilities in server(s) 102. As such, processor(s) 122 may include one or more of a digital processor, an analog processor, a digital circuit designed to process information, an analog circuit designed to process information, a state machine, and/or other mechanisms for electronically processing information. Although processor(s) 122 is shown in FIG. 1 as a single entity, this is for illustrative purposes only. In some implementations, processor(s) 122 may include a plurality of processing units. These processing units may be physically located within the same device, or processor(s) 122 may represent processing functionality of a plurality of devices operating in coordination. The processor(s) 122 may be configured to execute machine-readable instructions and components thereof including components 108, 110, 112, 114, 116, and/or other components. Processor(s) 122 may be configured to execute components 108, 110, 112, 114, 116, and/or other components by software; hardware; firmware; some combination of software, hardware, and/or firmware; and/or other mechanisms for configuring processing capabilities on processor(s) 122. As used herein, the term "machine-readable instruction component" may refer to any component or set of components that perform the functionality attributed to the machine-readable instruction component. This may include one or more physical processors during execution of processor readable instructions, the processor readable instructions, circuitry, hardware, storage media, or any other components.

It should be appreciated that although machine-readable instruction components 108, 110, 112, 114, and 116 are illustrated in FIG. 1 as being implemented within a single processing unit, in implementations in which processor(s) 122 includes multiple processing units, one or more of components 108, 110, 112, 114, and/or 116 may be implemented remotely from the other components. The description of the functionality provided by the different components 108, 110, 112, 114, and/or 116 described below is for illustrative purposes, and is not intended to be limiting, as any of components 108, 110, 112, 114, and/or 116 may provide more or less functionality than is described. For example, one or more of components 108, 110, 112, 114, and/or 116 may be eliminated, and some or all of its functionality may be provided by other ones of components 108, 110, 112, 114, and/or 116. As another example, processor(s) 122 may be configured to execute one or more additional machine-readable instruction components that may perform some or all of the functionality attributed below to one of components 108, 110, 112, 114, and/or 116.

Alternative implementations of the present disclosure have also been considered. By way of non-limiting example, cylinders may be tracked using RFID (Radio-frequency identification technology) chips, comprising a scanner disposed at the cage to measure entry and exit. In some implementations, cylinders may include pressure sensors installed in the valve, with communication devices in each tank and/or at a central location. In some implementations, cylinders may include "hall effect" monitors installed on the side of the cages. In some implementations, cages may include a "push button" option configured to provide an output signal responsive to cylinders being exchanged. In some implementations, cylinders may be manually weighed and/or measured periodically, (e.g., each evening), wherein resulting reports may be submitted manually to the supplier. In another implementation, one or more weight-based sensor(s) may be disposed beneath the cylinder storage apparatus, wherein the weight-based sensor(s) may be configured to provide an output signal conveying weight information related to the cylinder storage apparatus, cylinders disposed within the cylinder storage apparatus, and/or other components of the cylinder storage apparatus and/or system.

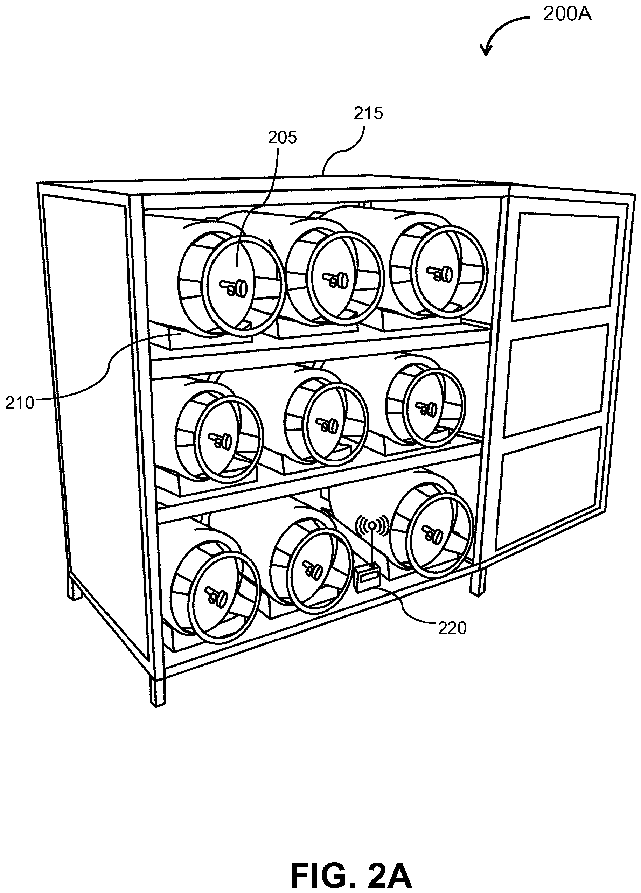

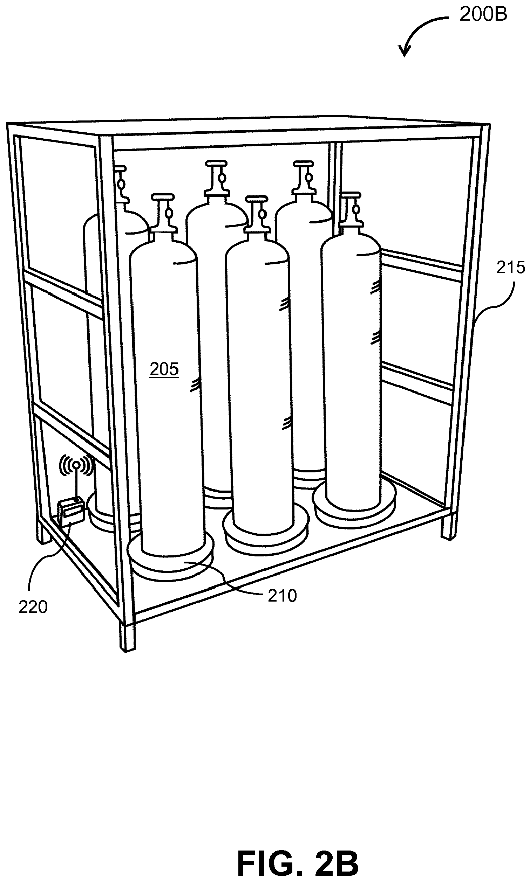

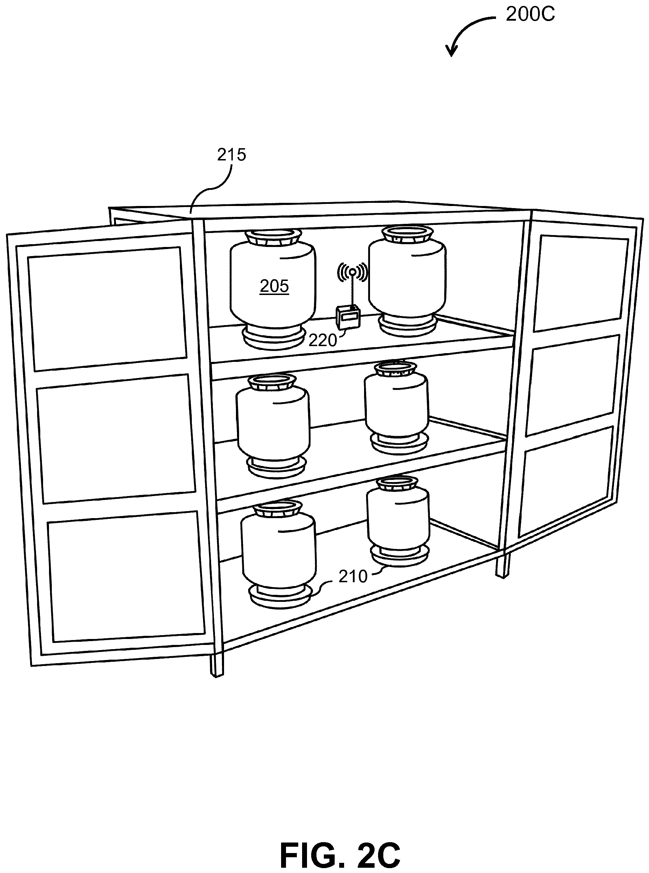

FIGS. 2A, 2B, and 2C, illustrate an exemplary system 200 configured for facilitating remote monitoring of gas cylinder exchange inventories, in accordance with one or more implementations. A standard-sized cylinder storage apparatus 215 may be configured to accommodate a plurality of corresponding standard-sized cylinders 205. System 200 may include a plurality of weight-based sensors 210 configured to be disposed within standard-sized cylinder storage apparatus 215. The plurality of weight-based sensors 210 may be formed such that the configuration of the first weight-based sensor corresponds to a type of standard-sized cylinder (e.g., volumetric capacity, shape, contents held, and/or other categorical distinctions). The plurality of weight-based sensors 210 may be disposed in a configuration corresponding to the layout of the cylinders disposed in cylinder storage apparatus 215 (e.g., quantity, position, orientation, and/or other layout characteristics). As a non-limiting example, FIG. 2A illustrates a system 200A wherein cylinder storage apparatus 215 may be an industry-standard storage cage configured to store portable propane tanks. The cylinder storage apparatus 215 may be configured to accommodate three rows of three cylinders disposed horizontally on each row. In some implementations, weight-based sensors 210 may be disposed between cylinders 205 and the corresponding resting surfaces of the cylinder storage apparatus. By way of non-limiting example, nine weight-based sensors may be disposed under nine portable propane cylinders, such that one cylinder rests on one weight based sensor. By way of non-limiting example, one weight-based sensor may be calibrated such that the weight threshold may be about thirty-three pounds per full cylinder.

FIG. 2B illustrates an exemplary system 200B configured for facilitating remote monitoring of gas cylinder exchange inventories, in accordance with one or more implementations. As another exemplary implementation, cylinder storage apparatus 215 may be an industry-standard storage cage configured to store industry-standard nitrogen tanks. Cylinder storage apparatus 215 may be configured to accommodate two rows of three cylinders disposed upright in each row. In some implementations, weight-based sensors 210 may be disposed between cylinders 205 and the corresponding resting surfaces of the cylinder storage apparatus. By way of non-limiting example, six weight-based sensors may be disposed under six industry-standard nitrogen cylinders, such that one cylinder rests on one weight based sensor. By way of non-limiting example, one weight-based sensor may be calibrated such that the weight threshold may be about eighty pounds per full cylinder.

FIG. 2C illustrates an exemplary system 200C configured for facilitating remote monitoring of gas cylinder exchange inventories, in accordance with one or more implementations. As another exemplary implementation, cylinder storage apparatus 215 may be any shelf, rack, storage cabinet, locker, cage, or other storage apparatus configured to store one or more cylinders, bottles, tanks, kegs, cans, Dewar flasks, and/or other containers. In some implementations, cylinders 205 may be placed upright on weight-based sensors 210 disposed within cylinder storage apparatus 215. By way of non-limiting example, weight-based sensors 210 may be configured such that the weight threshold may be adjustable. By way of non-limiting example, weight-based sensors configured for five-gallon propane tanks may have a weight threshold of about 37 pounds. As another non-limiting example, weight-based sensors configured for five-gallon nitrogen tanks may have a weight threshold of about 58 pounds. In some implementations, weight-based sensors 210 may be communicatively coupled with communications device 220. Communications device 220 may be disposed at cylinder storage apparatus 215. Communications device 220 may be configured to transmit an output signal provided by weight-based sensors 210 to an inventory database.

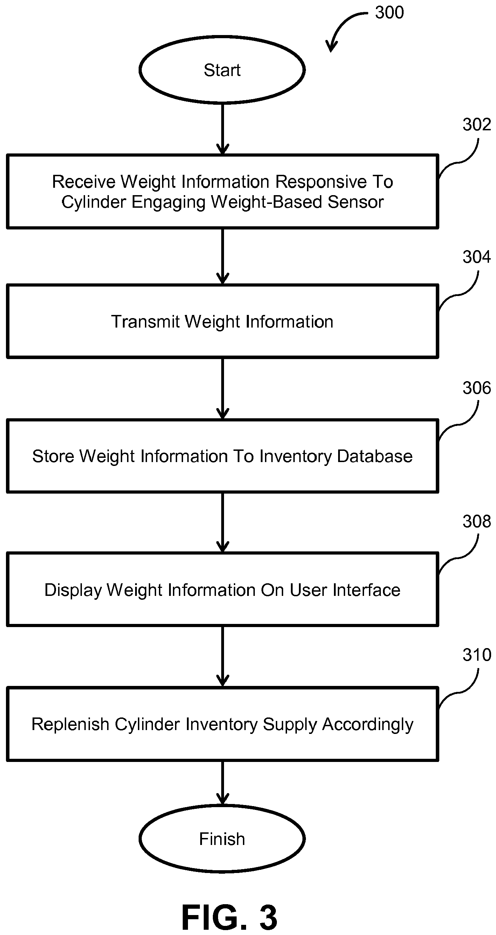

FIG. 3 illustrates a method 300 for facilitating remote monitoring of gas cylinder exchange inventories, in accordance with one or more implementations. The operations of method 300 presented below are intended to be illustrative. In some implementations, method 300 may be accomplished with one or more additional operations not described, and/or without one or more of the operations discussed. Additionally, the order in which the operations of method 300 are illustrated in FIG. 3 and described below is not intended to be limiting.

In some implementations, method 300 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 300 in response to instructions stored electronically on an electronic storage medium. The one or more processing devices may include one or more devices configured through hardware, firmware, and/or software to be specifically designed for execution of one or more of the operations of method 300.

At an operation 302, responsive to one or more cylinders engaging one or more weight-based sensors, receive weight information related to whether a cylinder located at the first cylinder position is full or empty. Operation 302 may be performed by one or more processors configured by a machine-readable instruction component that is the same as or similar to weight-based sensor(s) component 110, in accordance with one or more implementations.

At an operation 304, transmit weight information via output signal to one or more servers. Operation 304 may be performed by one or more processors configured by a machine-readable instruction component that is the same as or similar to communications device component 112, in accordance with one or more implementations.

At an operation 306, store the weight information conveyed by the output signal in an inventory database. Operation 306 may be performed by one or more processors configured by a machine-readable instruction component that is the same as or similar to inventory database component 114, in accordance with one or more implementations.

At an operation 308, display weight information on a user interface that conveys replenishment status of a plurality of cylinder storage apparatuses. Operation 308 may be performed by one or more processors configured by a machine-readable instruction component that is the same as or similar to user interface component 116, in accordance with one or more implementations.

At an operation 310, transmit notification of necessary cylinder inventory supply replenishments to supplier. Operation 310 may be performed by one or more processors configured by a machine-readable instruction component that is the same as or similar to user interface component 116, in accordance with one or more implementations.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the spirit and scope of the appended claims. For example, it is to be understood that the present technology contemplates that, to the extent possible, one or more features of any implementation can be combined with one or more features of any other implementation.

## Claims

1. A system configured for facilitating remote monitoring of gas cylinder exchange inventories, the system comprising:
one or more weight-based sensors configured to be disposed at corresponding cylinder positions including a first cylinder position within a cylinder storage apparatus, the one or more weight-based sensors including a first weight-based sensor, the first weight-based sensor being configured to provide an output signal that conveys information related to whether a cylinder located at the first cylinder position is full or empty;
one or more hardware processors communicatively coupled with the one or more weight-based sensors, the one or more hardware processors configured by machine-readable instructions to:
receive the output signal from the one or more weight-based sensors; and
effectuate transmission of the information conveyed by the output signal to one or more servers, the one or more servers being configured to store the information conveyed by the output signal in an inventory database and facilitate display of a user interface that conveys replenishment status of a plurality of cylinder storage apparatuses; and
a cylinder storage apparatus communications device configured to transmit the output signal.

2. The system of claim 1, wherein the one or more weight-based sensors are configured to be disposed within the cylinder storage apparatus in a configuration corresponding to a layout of one or more cylinders disposed within the cylinder storage apparatus, wherein the one or more weight-based sensors are configured to be removably coupled with the cylinder storage apparatus, the first weight-based sensor being configured to remain at the first cylinder position as cylinders are removed or replaced.

3. The system of claim 1, wherein the one or more weight-based sensors are configured to be disposed between the cylinder and a resting surface of the cylinder storage apparatus, the resting surface comprising one or more of a shelf, a slot, a ledge, a sill, a rack, or a floor.

4. The system of claim 1, wherein the first weight-based sensor is configured to be engaged by a given cylinder resting on the first weight-based sensor with the given cylinder being in a horizontal position, a vertical position, an upright position, or positioned on a first side at the first cylinder position.

5. The system of claim 1, wherein the output signal conveyed by the one or more weight-based sensors includes a binary signal conveying information related to whether an individual cylinder is either (1) full or (2) not full based on whether a weight threshold is breached.

6. The system of claim 1, wherein the one or more weight-based sensors comprises a power source configured to supply power to one or more weight-based sensors, the power source comprising one or more of a battery, a solar cell, or an electrical inlet configured to receive electricity from an external source, wherein the first weight-based sensor is configured to power on responsive to engagement by the cylinder being received at the first cylinder position.

7. The system of claim 1, wherein the first weight-based sensor comprises a first communications device configured to provide an output signal to one or both of the cylinder storage apparatus communications device or the one or more servers.

8. A system configured for facilitating remote monitoring of gas cylinder exchange inventories, the system comprising:
one or more hardware processors configured by machine-readable instructions to:
receive transmitted information conveyed by an output signal from a communications device communicatively coupled with one or more weight-based sensors, the one or more weight-based sensors being disposed at corresponding cylinder positions including a first cylinder position within a cylinder storage apparatus, the one or more weight-based sensors including a first weight-based sensor, the first weight-based sensor being configured to provide the output signal conveying information related to whether a cylinder located at the first cylinder position is full or empty;
store information conveyed by the output signal in an inventory database; and
facilitate display of a user interface that conveys replenishment status of a plurality of cylinder storage apparatuses.

9. The system of claim 8, wherein the one or more weight-based sensors are configured to be disposed within the cylinder storage apparatus in a configuration corresponding to a layout of one or more cylinders disposed within the cylinder storage apparatus, wherein the one or more weight-based sensors are configured to be removably coupled with the cylinder storage apparatus, the first weight-based sensor being configured to remain at the first cylinder position as cylinders are removed or replaced.

10. The system of claim 8, wherein the one or more weight-based sensors are configured to be disposed between the cylinder and a resting surface of the cylinder storage apparatus, the resting surface comprising one or more of a shelf, a slot, a ledge, a sill, a rack, or a floor.

11. The system of claim 8, wherein the first weight-based sensor is configured to be engaged by a given cylinder resting on the first weight-based sensor with the given cylinder being in a horizontal position, a vertical position, an upright position, or positioned on a first side at the first cylinder position.

12. The system of claim 8, wherein the output signal conveyed by the one or more weight-based sensors includes a binary signal conveying information related to whether an individual cylinder is either (1) full or (2) not full based on whether a weight threshold is breached.

13. The system of claim 8, wherein the first weight-based sensor comprises a power source independent of the one or more weight-based sensors, the power source comprising one or more of a battery, a solar cell, or an electrical inlet configured to receive electricity from an external source, wherein the first weight-based sensor is configured to power on responsive to engagement by the cylinder being received at the first cylinder position.

14. The system of claim 8, wherein the first weight-based sensor comprises a first communications device configured to provide an output signal to one or both of the cylinder storage apparatus communications device or the one or more servers.

15. A method for facilitating remote monitoring of gas cylinder exchange inventories, the method being performed by one or more hardware processors configured by machine-readable instructions, the method comprising:
receiving transmitted information conveyed by an output signal from a communications device communicatively coupled with one or more weight-based sensors, the one or more weight-based sensors being disposed at corresponding cylinder positions including a first cylinder position within a cylinder storage apparatus, the one or more weight-based sensors including a first weight-based sensor, the first weight-based sensor being configured to provide the output signal conveying information related to whether a cylinder located at the first cylinder position is full or empty;
storing information conveyed by the output signal in an inventory database; and
facilitating display of a user interface that conveys replenishment status of a plurality of cylinder storage apparatuses.

16. The method of claim 15, further comprising disposing the one or more weight-based sensors within the cylinder storage apparatus in a configuration corresponding to a layout of one or more cylinders disposed within the cylinder storage apparatus, such that the one or more weight-based sensors are configured to be removably coupled with the cylinder storage apparatus, wherein the first weight-based sensor being configured to remain at the first cylinder position as cylinders are removed or replaced.

17. The method of claim 15, further comprising engaging the first weight-based sensor such that a given cylinder is resting on the first weight-based sensor, wherein the given cylinder is in a horizontal position, a vertical position, an upright position, or positioned on a first side at the first cylinder position.

18. The method of claim 15, wherein the output signal includes a binary signal conveying information related to whether an individual cylinder is either (1) full or (2) not full based on whether a weight threshold is breached.

19. The method of claim 15, wherein the first weight-based sensor comprises a power source independent of the one or more weight-based sensors, the power source comprising one or more of a battery, a solar cell, or an electrical inlet configured to receive electricity from an external source, wherein the first weight-based sensor is configured to power on responsive to engagement by the cylinder being received at the first cylinder position.

20. The method of claim 15, wherein the first weight-based sensor comprises a first communications device configured to provide an output signal to one or both of the cylinder storage apparatus communications device or the one or more servers.
